# EUROPEAN PATENT APPLICATION

(11) **EP 3 364 256 A1**
(43) Date of publication of application: **22.08.2018**
(21) Application number: 18156259.6
(22) Date of filing: 12.02.2018
(51) Int. Cl.: G05B 13/04

(54) **HEAT RECOVERY STEAM GENERATOR ADAPTIVE CONTROL**

(30) Priority: 17.02.2017 US 201715436002
(71) Applicant: General Electric Company, Schenectady, NY 12345 (US)
(72) Inventor: MCKINLEY, Marc Harold, Salem, Virginia 24153 (US); UNNIKRISHNAN, Sunil, 500081 Hyderabad (IN)
(74) Representative: Fischer, Michael Maria

(57) **Abstract**

According to examples, heat recovery steam generator (HRSG) adaptive control (100) may include accessing (406) information including HRSG design operation data (108) for an HRSG (110), and plant operation data (120) for a plant (128) including the HRSG (110), and accessing (408) simulation results (134) of an HRSG transient dynamic model (114). A tuning parameter (122) for the HRSG transient dynamic model (114) may be determined (410) based on an analysis of the information and the simulation results (134). The HRSG transient dynamic model (114) may be updated (412) based on an application of the tuning parameter (122). Simulation results (134) may be generated (414) based on execution of the updated HRSG transient dynamic model (114). A determination (416) may be made as to whether a convergence criterion (124) is met based on an analysis of the information and the further simulation results (134). In response (418) to a determination that the convergence criterion (124) is met, operation of the HRSG (110) may be controlled using the updated HRSG transient dynamic model (136).

## Description

### BACKGROUND INFORMATION

A heat recovery steam generator (HRSG) may be described as an energy recovery heat exchanger. The HRSG may recover heat from a stream of hot gas. The HRSG produces steam which may be used in a process, such as cogeneration. The steam may also be used to drive components in a plant that includes the HRSG. An example of a component includes a turbine.

The HRSG may include many components and systems, many of which are under automated control or partially automated control. Different types of models may be used to control operation of the HRSG. The accuracy of such models may also impact control of other operations related to a plant that includes the HRSG.

### BRIEF DESCRIPTION OF DRAWINGS

Features of the present disclosure are illustrated by way of examples shown in the following figures. In the following figures, like numerals indicate like elements, in which:
Figure 1 illustrates an architecture of a heat recovery steam generator (HRSG) adaptive control apparatus, according to an example of the present disclosure;
Figure 2 illustrates further details of a simulation layer data transformer of the HRSG adaptive control apparatus of Figure 1, according to an example of the present disclosure;
Figure 3 illustrates further details of a model tuner of the HRSG adaptive control apparatus of Figure 1, according to an example of the present disclosure;
Figure 4 illustrates a flowchart of a method for adaptive control of an HRSG, according to an example of the present disclosure;
Figure 5 illustrates a flowchart of another method for adaptive control of an HRSG, according to an example of the present disclosure; and
Figure 6 illustrates a flowchart of a further method for adaptive control of an HRSG, according to an example of the present disclosure.

### DETAILED DESCRIPTION

For simplicity and illustrative purposes, the present disclosure is described by referring mainly to examples thereof. In the following description, details are set forth in order to provide an understanding of the present disclosure. It will be readily apparent however, that the present disclosure may be practiced without limitation to these details. In other instances, methods and structures apparent to one of ordinary skill in the art have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

According to examples of the present disclosure, a heat recovery steam generator (HRSG) adaptive control apparatus and methods for HRSG adaptive control are disclosed herein. The apparatus and methods disclosed herein may provide for adaptive tuning of an HRSG transient dynamic model. For example, the adaptive tuning may be based on an analysis of HRSG design operation data from a steady state model of the HRSG and plant operation data for a plant that includes the HRSG. The apparatus and methods disclosed herein may tune the HRSG transient dynamic model to match a steady state operational point of the HRSG steady state model. The tuned HRSG transient dynamic model may be implemented, for example, for HRSG operation control, HRSG fault detection, plant operation control, operator training simulation, and other such applications related to an HRSG or a plant including the HRSG.

An HRSG steady state model may be described as a computerized model of components of the HRSG. Examples of the HRSG components may include a superheater, an economizer, an evaporator, etc. According to an example, the HRSG steady state model may include and/or be executed to provide various types of data such as HRSG mechanical design data and HRSG design operation data. HRSG mechanical design data may include data that describes physical dimensions of components of the HRSG, and a number of sub-components of the HRSG. For example, the physical dimensions may include tube diameters for a superheater of the HRSG. The number of sub-components of the HRSG may include, for example, a number of tubes of the superheater. The HRSG design operation data may be described as performance data that is indicative of operational characteristics of the HRSG. The HRSG design operation data may include different temperatures associated with the HRSG components based on different input conditions. The HRSG design operation data may include other data such as steam flow rate, pressure associated with a component of the HRSG, etc.

An HRSG transient dynamic model may be described as a computerized model that represents transient behavior of the components of the HRSG. For example, an HRSG transient dynamic model may be used to predict a rate of change for different temperatures associated with the HRSG components based on different input conditions. The HRSG transient dynamic model may be used to predict other data such as rate of change for the steam flow rate, rate of change for the pressure associated with a component of the HRSG, etc.

Plant operation data may be described as data associated with operation of a plant that includes the HRSG. Examples of plant operation data may include different temperatures associated with the HRSG components based on different input conditions, steam flow rate, pressure associated with a component of the HRSG, etc.

The steady-state operational point may be described as an operational point of the HRSG for which an attribute of a component of the HRSG for the steady state model matches the attribute of the component of the HRSG for the transient dynamic model. For example, the steady-state operational point may represent a temperature of superheater outlet steam or gas temperature of the HRSG at a steady-state operational condition of the HRSG.

For the apparatus and methods disclosed herein, the steady-state HRSG mechanical design data and the HRSG design operation data from a steady state model of the HRSG, and/or from an actual reference plant, may be collected by a simulation layer data transformer. The simulation layer data transformer may apply a data transformation to the mechanical design data and HRSG design operation data to support the development of an HRSG transient dynamic model. The simulation layer data transformer may generate model parameters for the HRSG transient dynamic model. The model parameters may be populated for HRSG components such as a superheater, an economizer, an evaporator, etc. Examples of the model parameters may include tube bundle metal mass, heat transfer surface areas based on metal physical properties, tube geometries and spatial alignment, etc. The HRSG transient dynamic model may be generated by application of the model parameters to a predetermined HRSG transient dynamic model.

A model simulator may execute the HRSG transient dynamic model to generate simulation results. The model simulator may be designated as an HRSG transient dynamic model based simulator. The model simulator may receive tuning parameters to generate an HRSG tuned transient dynamic model. The tuning parameters received by the model simulator may be described as calibrated tuning parameters that are established, for example, based on past experience, prior to calibration by a model tuner.

The model tuner may dynamically calibrate the tuning parameters for the HRSG tuned transient dynamic model to match a steady-state operational point and a simulation performance for the HRSG transient dynamic model. The model tuner may be designated as an HRSG transient dynamic model tuner. The tuning parameters may include the heat transfer coefficient, friction factor, ambient losses, and other tunable factors. In this regard, the model tuner may apply a convergence criterion and a weight to dynamically calibrate the heat transfer coefficient and other tunable factors of the HRSG transient dynamic model to match the steady-state operational point and simulation performance.

The model tuner may use an integrative moving window technique to calibrate the tuning parameters. The integrative moving window technique may be described as a window of time during which plant operation data is collected for use by the model tuner. Thus the HRSG transient dynamic model may be tuned for the particular window of time.

The HRSG transient dynamic model may represent a transient dynamic model of a heat exchanger including an HRSG or a complete HRSG. For example, the HRSG transient dynamic model may represent a transient dynamic model of a superheater, an evaporator, etc., or the complete HRSG. Therefore, if the apparatus and methods disclosed herein are to control a superheater, a predetermined transient dynamic model of a superheater may be parameterized by a simulation layer data transformer to generate model parameters for the transient dynamic model of the superheater. Otherwise, if the apparatus and methods disclosed herein are to control an HRSG, a predetermined transient dynamic model of an HRSG may be parameterized by the simulation layer data transformer to generate model parameters for the transient dynamic model of the HRSG.

The HRSG transient dynamic model may be integrated with other transient dynamic models of systems other than the HRSG. The integration may provide a high-fidelity transient dynamic model of a complete combined-cycle power plant (CCPP) for control system validation, plant operability, etc.

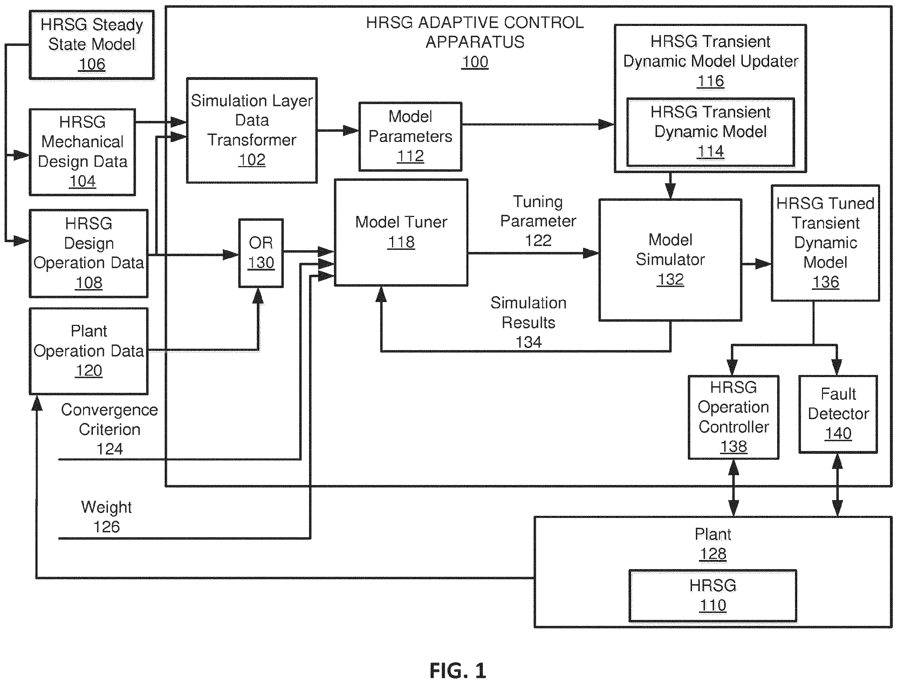

Figure 1 illustrates an HRSG adaptive control apparatus 100, according to an example of the present disclosure. The apparatus 100 may include a simulation layer data transformer 102 to access HRSG mechanical design data 104 and HRSG design operation data 108. The HRSG mechanical design data 104 may represent design data used for a steady state model 106 of an HRSG 110. The HRSG design operation data 108 may be generated from operation of the steady state model 106 of the HRSG 110. The HRSG mechanical design data 104 may include, for example, physical dimensions of components of the HRSG, and a number of sub-components of the HRSG. For example, the physical dimensions may include tube diameters for a superheater of the HRSG. The number of sub-components of the HRSG may include, for example, a number of tubes of the superheater. The HRSG design operation data 108 may represent design operation data for the steady state model 106 of the HRSG 110. The HRSG design operation data 108 may include, for example, temperature, pressure, enthalpy, mass flow rate at inlets and outlets at every component of the HRSG, etc.

The simulation layer data transformer 102 may generate, based on the HRSG mechanical design data 104 and the HRSG design operation data 108, model parameters 112 for an HRSG transient dynamic model 114 of the HRSG 110.

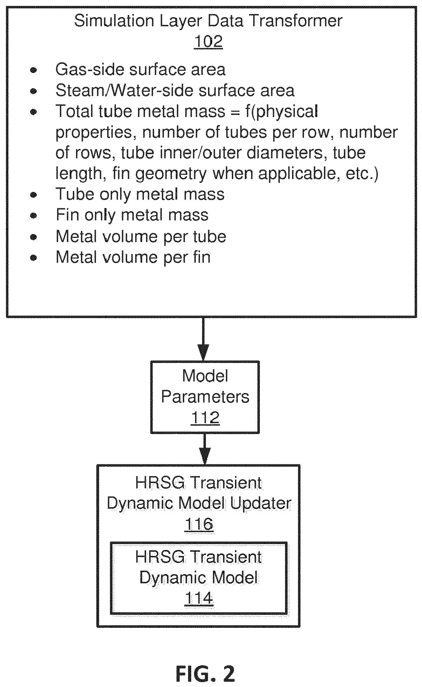

Figure 2 illustrates further details of the simulation layer data transformer 102 of the apparatus 100, according to an example of the present disclosure. The simulation layer data transformer 102 may perform computations to determine gas-side surface area, steam and water-side surface area depending on the component (e.g., water for economizer, steam for superheater and evaporator, etc.), total tube metal mass, tube metal mass excluding fin metal mass, fin metal mass excluding tube metal mass, metal volume per tube, metal volume per fin, etc., for the components of the HRSG, or for the HRSG. For example, as disclosed herein, if the apparatus 100 is to control a superheater, the computations may be performed for a superheater. Otherwise, if the apparatus 100 is to control an HRSG, the computations may be performed for the HRSG. The total tube metal mass may be determined as a function of physical properties such as a density of the tube material, a number of tubes per row, a number of rows, tube inner and outer diameters, tube length, fin geometry when applicable, etc.

The model parameters 112 for the HRSG 110 may include, for example, gas-side surface area, steam and water-side surface area, total tube metal mass, tube metal mass excluding fin metal mass, etc., as determined by the simulation layer data transformer 102.

An HRSG transient dynamic model updater 116 may update the HRSG transient dynamic model 114 based on the model parameters 112. That is, the model parameters 112 may be applied to the HRSG transient dynamic model 114 to update the HRSG transient dynamic model 114. Alternatively, the HRSG transient dynamic model updater 116 may update a transient dynamic model of a component of the HRSG 110 based on the model parameters 112. For example, the component of the HRSG 110 may include an economizer, an evaporator, a superheater, a water preheater, etc. The HRSG transient dynamic model 114 may include a predetermined HRSG transient dynamic model for the HRSG 110.

A model tuner 118 may calibrate the HRSG transient dynamic model 114 relative to a particular operating point of the HRSG steady state model 106. The data associated with the particular operating point of the HRSG steady state model 106 may be determined from the HRSG design operation data 108 and plant operation data 120. The calibration of the HRSG transient dynamic model 114 may be implemented to determine a tuning parameter 122 for the HRSG transient dynamic model 114. The tuning parameter 122 may include, for example, a heat transfer coefficient, a friction factor, ambient losses, and other tunable factors. As disclosed herein, the tuning parameter 122 may be applied to the HRSG transient dynamic model 114 to tune the HRSG transient dynamic model 114 such that the HRSG transient dynamic model 114 matches a steady state operational point of the HRSG steady state model 106. In this regard, tuning the HRSG transient dynamic model 114 may be described as updating the HRSG transient dynamic model 114 based on application of the tuning parameter 122. The model tuner 118 may access the HRSG design operation data 108, the plant operation data 120, a convergence criterion 124, and a weight 126.

The plant operation data 120 may include real-time, and/or actual data from a plant 128. The plant operation data 120 may be used with the HRSG design operation data 108, the convergence criterion 124, and the weight 126 to tune and calibrate the HRSG transient dynamic model 114.

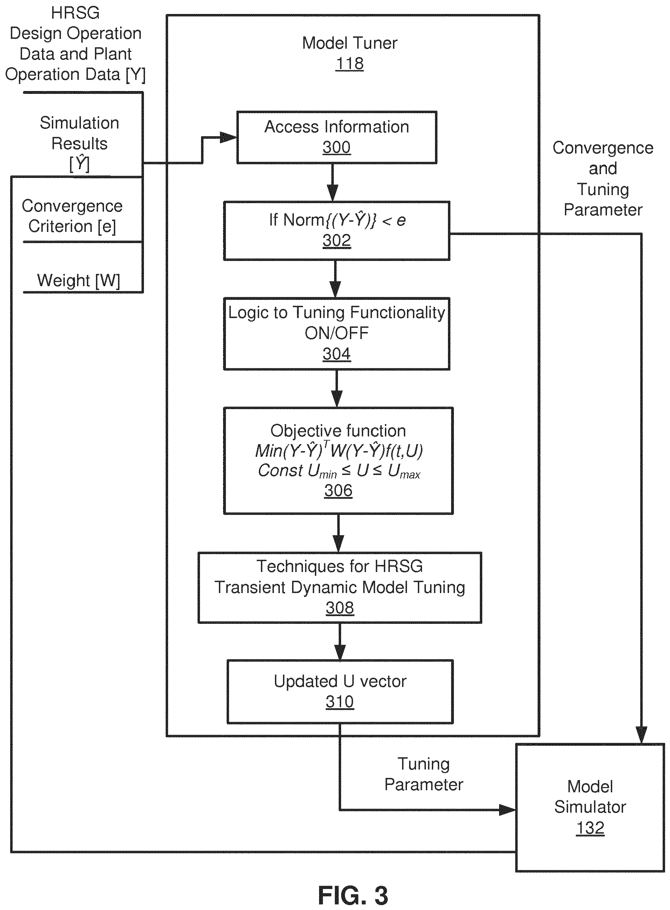

The convergence criterion 124 may be received or otherwise determined for the HRSG 110. As disclosed herein with respect to Figure 3, the convergence criterion 124 may be described as a threshold that is used to stop further iterations processed by the model tuner 118 with respect to determination of the tuning parameter 122. The convergence criterion 124 may be based on factors such as predicted steam temperature, water temperature, and other specifications of the HRSG 110.

The weight 126 may be used to specify different weights for factors of the HRSG transient dynamic model 114 that are to be fine-tuned. For example, if a temperature associated with a superheater for the HRSG 110 is to be fine-tuned, then the weight 126 may be increased for the temperature associated with the superheater, compared to temperatures associated with other components of the HRSG 110.

With respect to the OR block 130, the plant operation data 120 may be superimposed onto the HRSG design operation data 108. For example, the HRSG design operation data 108 may be substituted with available plant operation data 120. Alternatively, the HRSG design operation data 108 for certain components may be substituted with corresponding plant operation data 120. In this regard, the OR block 130 may implement a higher accuracy representation of the HRSG transient dynamic model 114 based on selective superimposition of the plant operation data 120 onto the HRSG design operation data 108. For example, the OR block 130 may implement superimposition of the plant operation data 120 related to mass flow rate at inlets and outlets at every component of the HRSG 110 onto the corresponding HRSG design operation data 108. In this regard, the plant operation data 120 may provide for real-time updates to HRSG transient dynamic model 114.

In some examples, the elements of the apparatus 100 may be machine readable instructions stored on a non-transitory computer readable medium. In this regard, the apparatus 100 may include or be a non-transitory computer readable medium. In some examples, the elements of the apparatus 100 may be hardware or a combination of machine readable instructions and hardware.

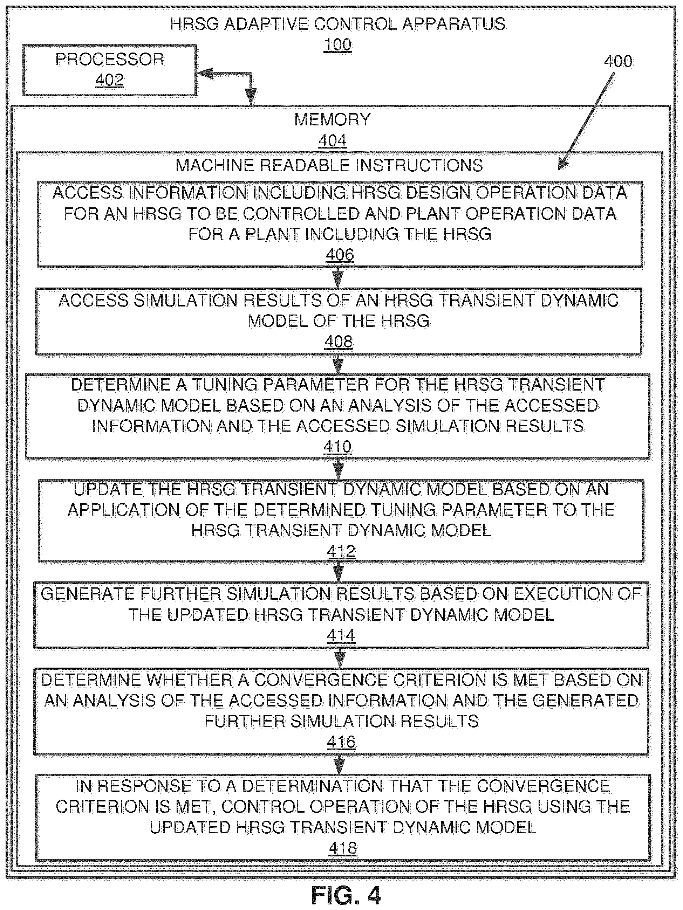

Operation of the apparatus 100 is described with reference to Figures 1-3. The operations disclosed herein with respect to the various elements of the apparatus 100 may be performed by a processor (e.g., the processor 402 of Figure 4). For example, a processor (e.g., the processor 402 of Figure 4) may perform the operations disclosed herein with respect to the simulation layer data transformer 102, the HRSG transient dynamic model updater 116, the model tuner 118, the model simulator 132, the HRSG operation controller 138, and the fault detector 140.

In operation, the model tuner 118 may minimize an error between the HRSG transient dynamic model 114 and information that includes the steady state HRSG design operation data 108 and the steady state plant operation data 120. The model tuner 118 may minimize the error based on the convergence criterion 124. Further, the model tuner 118 may apply the weight 126 to a specified factor of the HRSG transient dynamic model 114 that is to be fine-tuned. Once the convergence criterion 124 is met, the model tuner 118 may generate the tuning parameter 122 for the HRSG transient dynamic model 114. The model tuner 118 may also generate a plurality of the tuning parameters that include, for example, a heat transfer coefficient, a friction factor, ambient losses, and other tunable factors.

The model tuner 118 may operate in an iterative manner to generate the tuning parameter 122. The iterative operation may continue until the model tuner 118 has met the convergence criterion 124. That is, for each iteration of the HRSG transient dynamic model 114, the model tuner 118 may generate an updated tuning parameter 122, which a model simulator 132 may apply to execute the HRSG transient dynamic model 114. If the convergence criterion 124 has not been met, then the model tuner 118 may determine an updated tuning parameter 122 based on an evaluation of the HRSG design operation data 108, the plant operation data 120, the convergence criterion 124, the weight 126, and simulation results 134 from execution of the HRSG transient dynamic model 114.

Figure 3 illustrates further details of the model tuner 118 of the apparatus 100, according to an example of the present disclosure. At block 300, the model tuner 118 may access the HRSG design operation data 108 and the plant operation data 120 as Y, the simulation results 134 as Y, the convergence criterion 124 as *e,* and the weight 126 as W. Operations such as removal of outliers, smoothing of data, etc., may be performed on the data accessed at block 300.

At block 302, if a normalized difference between information that includes the plant operation data 120 and the HRSG design operation data 108 specified as Y, and the simulation results 134 specified as Y, is less than the convergence criterion 124 (i.e., if Norm*{(Y-Ŷ)}* < *e*)*,* then the model tuner 118 may determine that the convergence criterion 124 is met. In response to a determination that the convergence criterion 124 is met, the model tuner 118 may generate the tuning parameter 122 based on the current values of the HRSG design operation data 108 and the plant operation data 120 as Y, the simulation results 134 as Y, the convergence criterion 124 as *e,* and the weight 126 as W. The tuning parameter 122 and the indication of convergence may be forwarded to the model simulator 132. The model simulator 132 may generate an HRSG tuned transient dynamic model 136 as illustrated in Figure 1. Otherwise, in response to a determination at block 302 that information that includes the plant operation data 120 and the HRSG design operation data 108 specified as Y, and the simulation results 134 specified as Y, is greater than or equal to the convergence criterion (i.e., if Norm*{(Y-Ŷ)}* ≥ *e),* then processing may proceed to block 304.

At block 304, the logic to the tuning functionality of the model tuner 118 may be enabled. For example, the logic to the tuning functionality may be enabled by selection of an ON state.

At block 306, an objective function may be implemented to minimize the difference between information including the plant operation data 120 and the HRSG design operation data 108, and the simulation results 134, where the weight 126 is applied to the difference between the information including the plant operation data 120 and the HRSG design operation data 108, and the simulation results 134 as follows: *Min*(*Y* - Ŷ)*^{T}W*(*Y* - Ŷ)*f*(*t*, *U*)*,* where *U* is constrained between *Uₘᵢₙ* and *Uₘₐₓ* (i.e., *Const Uₘᵢₙ* ≤ *U* ≤ *Uₘₐₓ*). For block 306, *U* may represent constraints on the tuning parameter 122, where the tuning parameter 122 is to be tuned between *Uₘᵢₙ* and *Uₘₐₓ*. *U* may represent a vector of a plurality of tuning parameters, where each of the plurality of tuning parameters includes a minimum value *Uₘᵢₙ* and a maximum value *Uₘₐₓ*. For a single tuning parameter, *U* may represent a scalar. Thus, *U* may be constrained between *Uₘᵢₙ* and *Uₘₐₓ*, irrespective of a value for *U* determined at block 306.

At block 308, a variety of techniques may be used for the HRSG transient dynamic model tuning for determination of an updated value of *U*. Examples of techniques that may be used for determination of an updated value of *U* includes multivariate optimization, and other such techniques.

At block 310, the updated *U* vector may be forwarded to the model simulator 132. The updated *U* vector may represent an updated tuning parameter (or tuning parameters) 122. The model simulator 132 may apply the tuning parameter 122 to the HRSG transient dynamic model 114. The results of application of the tuning parameter 122 to the HRSG transient dynamic model 114 may be forwarded as the simulation results Y, which are accessed at block 300 for further iterations until the convergence criterion 124 is met at block 302.

Referring again to Figure 1, the HRSG tuned transient dynamic model 136 may be implemented by an HRSG operation controller 138 to control operation of the HRSG 110 in a live plant environment. With respect to controlling operation of the HRSG 110, the HRSG tuned transient dynamic model 136 may be used to determine control set points for a controls loop for the HRSG operation controller 138. The HRSG tuned transient dynamic model 136 may be implemented by the HRSG operation controller 138 for control studies of the HRSG 110, and/or the plant 128 that includes the HRSG 110.

The HRSG tuned transient dynamic model 136 may be implemented by a fault detector 140. For example, the fault detector 140 may implement the HRSG tuned transient dynamic model 136 to detect transmitter failure. For example, data related to pressure for a component of the HRSG 110 may be compared to actual plant data to determine whether a transmitter that detects the pressure at the plant 128 is providing an accurate reading. Based on the detected transmitter failure, the HRSG operation controller 138 may implement the HRSG tuned transient dynamic model 136 to prevent tripping of the plant 128 including the HRSG 110. An example of tripping of the plant 128 may include plant shut-down due to a pressure overload. In this regard, the HRSG tuned transient dynamic model 136 may provide for predictive maintenance of the plant 128 that includes the HRSG 110.

The HRSG tuned transient dynamic model 136 may be implemented for other operations related to the HRSG 110. For example, a plant operation controller (not shown) of the apparatus 100 may implement the HRSG tuned transient dynamic model 136 to control operation of the plant 128 including the HRSG 110. For example, the HRSG tuned transient dynamic model 136 may be used to tune various control loops of a plant transient dynamic model (not shown) to control operation of the plant 128 including the HRSG 110. With respect to tuning of the plant transient dynamic model, results from execution of the HRSG tuned transient dynamic model 136 may be used to provide operational feedback for the HRSG 110 for operational input to the plant transient dynamic model, in a similar manner as the plant operation data 120.

According to another example, the HRSG tuned transient dynamic model 136 may be implemented by an operator training simulator (not shown) of the apparatus 100 for providing training simulation of the HRSG 110 and/or the plant 128 that includes the HRSG 110. In this regard, faults may be injected into the HRSG tuned transient dynamic model 136 for training an operator, and/or ascertaining a reaction of the operator of the HRSG 110, and/or the plant 128 that includes the HRSG 110.

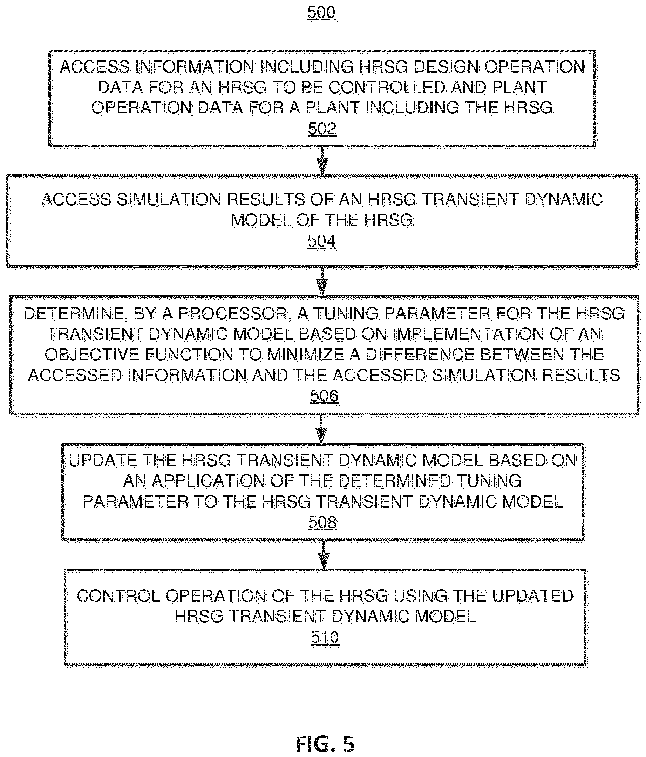

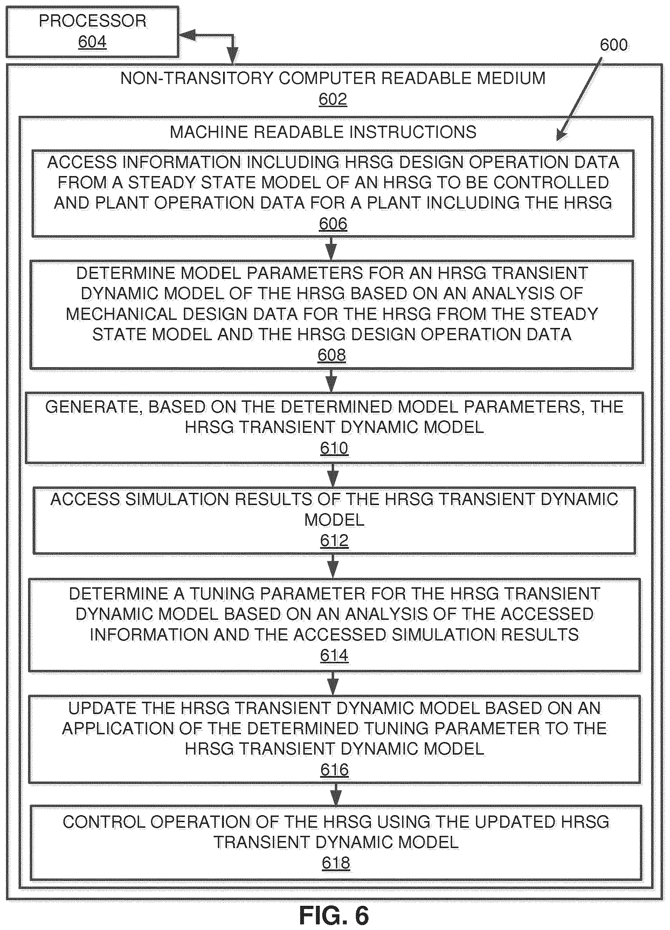

Figures 4-6 respectively illustrate flowcharts of methods 400, 500, and 600 for adaptive control of an HRSG, according to examples. The methods 400, 500, and 600 may be implemented on the apparatus 100 described above with reference to Figures 1-3 by way of example and not limitation. The methods 400, 500, and 600 may be practiced in other apparatus. In addition to showing the method 400, Figure 4 shows hardware of the apparatus 100 that may execute the method 400. The hardware may include a processor 402, and a memory 404 storing machine readable instructions that when executed by the processor cause the processor to perform the steps of the method 400. The memory 404 may represent a non-transitory computer readable medium. Figure 5 may represent a method for adaptive control of an HRSG, and the steps of the method. Figure 6 may represent a non-transitory computer readable medium 602 having stored thereon machine readable instructions to provide HRSG adaptive control. The machine readable instructions, when executed, cause a processor 604 to perform steps of the method 600 also shown in Figure 6.

The processor 402 of Figure 4 and/or the processor 604 of Figure 6 may include a single or multiple processors or other hardware processing circuit, to execute the methods, functions and other processes described herein. These methods, functions and other processes may be embodied as machine readable instructions stored on a computer readable medium, which may be non-transitory (e.g., the non-transitory computer readable medium 602 of Figure 6), such as hardware storage devices (e.g., RAM (random access memory), ROM (read only memory), EPROM (erasable, programmable ROM), EEPROM (electrically erasable, programmable ROM), hard drives, and flash memory). The memory 404 may include a RAM, where the machine readable instructions and data for a processor may reside during runtime.

Referring to Figures 1-4, and particularly to the method 400 shown in Figure 4, at block 406, the method 400 may include accessing (e.g., by the model tuner 118) information including HRSG design operation data 108 for the HRSG 110 to be controlled and plant operation data 120 for the plant 128 including the HRSG 110.

At block 408, the method 400 may include accessing (e.g., by the model tuner 118) simulation results of the HRSG transient dynamic model 114 of the HRSG 110.

At block 410, the method 400 may include determining (e.g., by the model tuner 118) the tuning parameter 122 for the HRSG transient dynamic model 114 based on an analysis of the accessed information and the accessed simulation results 134.

At block 412, the method 400 may include updating (e.g., by the model simulator 132) the HRSG transient dynamic model 114 based on an application of the determined tuning parameter 122 to the HRSG transient dynamic model 114.

At block 414, the method 400 may include generating (e.g., by the model simulator 132) further simulation results 134 based on execution of the updated HRSG transient dynamic model.

At block 416, the method 400 may include determining (e.g., by the model tuner 118) whether the convergence criterion 124 is met based on an analysis of the accessed information and the generated further simulation results 134.

At block 418, in response to a determination that the convergence criterion 124 is met, the method 400 may include controlling (e.g., by the HRSG operation controller 138) operation of the HRSG 110 using the updated HRSG transient dynamic model (e.g., the HRSG tuned transient dynamic model 136).

According to examples, in response to a determination that the convergence criterion 124 is not met (e.g., block 304 of Figure 3), the method 400 may include determining an updated tuning parameter 122 based on an analysis of the accessed information and the generated further simulation results 134. The method 400 may include further updating the updated HRSG transient dynamic model based on an application of the determined updated tuning parameter 122 to the updated HRSG transient dynamic model. The method 400 may include generating updated simulation results 134 based on execution of the further updated HRSG transient dynamic model. The method 400 may include determining whether the convergence criterion 124 is met based on an analysis of the accessed information and the generated updated simulation results 134.

According to examples, for the method 400, the HRSG design operation data 108 may include results of execution of a steady state model of the HRSG 110 (e.g., the HRSG steady state model 106).

According to examples, for the method 400, determining whether the convergence criterion 124 is met based on the analysis of the accessed information and the generated further simulation results 134 may further include determining whether the convergence criterion 124 is met based on an analysis of a difference (e.g., block 302 of Figure 3) between a first set of data including data selected from the HRSG design operation data 108 and the plant operation data 120, and a second set of data including the generated further simulation results 134.

According to examples, the method 400 may further include accessing HRSG mechanical design data 104 for the HRSG 110 from the steady state model 106 of the HRSG 110. The method 400 may include determining model parameters 112 for the HRSG transient dynamic model 114 prior to the update of the HRSG transient dynamic model 114 based on an analysis of the accessed HRSG mechanical design data 104 and the HRSG design operation data 108. The method 400 may further include applying the determined model parameters 112 (e.g., by the HRSG transient dynamic model updater 116) to a predetermined HRSG transient dynamic model to generate the HRSG transient dynamic model 114 prior to the update of the HRSG transient dynamic model 114.

According to examples, the method 400 may further include substituting selected data for the HRSG design operation data 108 with data from the plant operation data 120. The selected data may represent data that is missing from the HRSG design operation data 108 and/or data that is identified for substitution with the data from the plant operation data 120.

According to examples, the method 400 may further include analyzing an operation of the HRSG 110 based on an application of load to the updated HRSG transient dynamic model 114, and performing fault detection operations (e.g., by the fault detector 140) based on results of the analysis of the operation of the HRSG 110.

According to examples, the method 400 may further include accessing the weight 126 to be applied to a factor of the HRSG transient dynamic model 114 prior to the update of the HRSG transient dynamic model 114. The weight 126 may be applied to the factor for fine tuning of the factor. The method 400 may include determining the tuning parameter 122 based on an analysis of the accessed information, the accessed weight 126, and the accessed simulation results 134 of the HRSG transient dynamic model 114 (e.g., by the model tuner 118) prior to the update of the HRSG transient dynamic model 114.

Referring to Figures 1-3 and 5, and particularly Figure 5, for the method 500, at block 502, the method may include accessing (e.g., by the model tuner 118) information including HRSG design operation data 108 for the HRSG 110 to be controlled, and plant operation data 120 for the plant 128 including the HRSG 110.

At block 504, the method 500 may include accessing (e.g., by the model tuner 118) simulation results 134 of the HRSG transient dynamic model 114 of the HRSG 110.

At block 506, the method 500 may include determining the tuning parameter 122 for the HRSG transient dynamic model 114 based on implementation of an objective function (e.g., block 306 of Figure 3) to minimize a difference between the accessed information and accessed simulation results 134. For the objective function, the weight 126 may be applied to the difference between the accessed information and the accessed simulation results 134.

At block 508, the method 500 may include updating (e.g., by the model simulator 132) the HRSG transient dynamic model 114 based on an application of the determined tuning parameter 122 to the HRSG transient dynamic model 114.

At block 510, the method 500 may include controlling (e.g., by the HRSG operation controller 138) operation of the HRSG 110 using the updated HRSG transient dynamic model.

Referring to Figures 1-3 and 6, and particularly Figure 6, for the method 600, at block 606, the method may include accessing (e.g., by the model tuner 118) information including HRSG design operation data 108 from the steady state model 106 of the HRSG 110 to be controlled, and plant operation data 120 for the plant 128 including the HRSG 110.

At block 608, the method 600 may include determining (e.g., by the simulation layer data transformer 102) model parameters 112 for the HRSG transient dynamic model 114 of the HRSG 110 based on an analysis of mechanical design data for the HRSG 110 from the steady state model 106 and the HRSG design operation data 108.

At block 610, the method 600 may include generating (e.g., by the HRSG transient dynamic model updater 116), based on the determined model parameters 112, the HRSG transient dynamic model 114.

At block 612, the method 600 may include accessing simulation results 134 of the HRSG transient dynamic model 114.

At block 614, the method 600 may include determining (e.g., by the model tuner 118) the tuning parameter 122 for the HRSG transient dynamic model 114 based on an analysis of the accessed information and accessed simulation results 134.

At block 616, the method 600 may include updating (e.g., by the model simulator 132) the HRSG transient dynamic model 114 based on an application of the determined tuning parameter 122 to the HRSG transient dynamic model 114. For the determined tuning parameter 122, operational performance of the updated HRSG transient dynamic model and the steady state model 106 at a steady state operation point may be generally identical. Generally identical means that the operational performance of the updated HRSG transient dynamic model and the steady state model 106 at a steady state operation point are approximately 95% (or another user defined percentage) identical.

At block 618, the method 600 may include controlling (e.g., by the HRSG operation controller 138) operation of the HRSG 110 using the updated HRSG transient dynamic model (e.g., the HRSG tuned transient dynamic model 136).

According to examples, for the method 600, determining the tuning parameter 122 for the HRSG transient dynamic model 114 may further include iteratively analyzing (e.g., as disclosed herein with respect to Figure 3) the accessed information and the accessed simulation results 134 of the HRSG transient dynamic model 114 until the convergence criterion 124 is met.

What has been described and illustrated herein is an example along with some of its variations. The terms, descriptions and figures used herein are set forth by way of illustration only and are not meant as limitations. Many variations are possible within the spirit and scope of the subject matter, which is intended to be defined by the following claims -- and their equivalents -- in which all terms are meant in their broadest reasonable sense unless otherwise indicated.

Various aspects and embodiments of the present invention are defined by the following clauses:
1. A heat recovery steam generator (HRSG) adaptive control apparatus comprising:
   a processor; and
   a memory storing machine readable instructions that when executed by the processor cause the processor to:
      access information including HRSG design operation data for an HRSG to be controlled and plant operation data for a plant including the HRSG;
      access simulation results of an HRSG transient dynamic model of the HRSG;
      determine a tuning parameter for the HRSG transient dynamic model based on an analysis of the accessed information and the accessed simulation results;
      update the HRSG transient dynamic model based on an application of the determined tuning parameter to the HRSG transient dynamic model;
      generate further simulation results based on execution of the updated HRSG transient dynamic model;
      determine whether a convergence criterion is met based on an analysis of the accessed information and the generated further simulation results; and
      in response to a determination that the convergence criterion is met, control operation of the HRSG using the updated HRSG transient dynamic model.
2. The HRSG adaptive control apparatus according to clause 1, wherein the machine readable instructions, when executed by the processor, further cause the processor to:
   in response to a determination that the convergence criterion is not met, determine an updated tuning parameter based on an analysis of the accessed information and the generated further simulation results;
   further update the updated HRSG transient dynamic model based on an application of the determined updated tuning parameter to the updated HRSG transient dynamic model;
   generate updated simulation results based on execution of the further updated HRSG transient dynamic model; and
   determine whether the convergence criterion is met based on an analysis of the accessed information and the generated updated simulation results.
3. The HRSG adaptive control apparatus according to clause 1, wherein the HRSG design operation data includes results of execution of a steady state model of the HRSG.
4. The HRSG adaptive control apparatus according to clause 1, wherein the machine readable instructions to determine whether the convergence criterion is met based on the analysis of the accessed information and the generated further simulation results further comprise machine readable instructions to cause the processor to:
   determine whether the convergence criterion is met based on an analysis of a difference between a first set of data including data selected from the HRSG design operation data and the plant operation data, and a second set of data including the generated further simulation results.
5. The HRSG adaptive control apparatus according to clause 1, wherein the machine readable instructions, when executed by the processor, further cause the processor to:
   access HRSG mechanical design data for the HRSG from a steady state model of the HRSG;
   determine model parameters for the HRSG transient dynamic model prior to the update of the HRSG transient dynamic model based on an analysis of the accessed HRSG mechanical design data and the HRSG design operation data; and
   apply the determined model parameters to a predetermined HRSG transient dynamic model to generate the HRSG transient dynamic model prior to the update of the HRSG transient dynamic model.
6. The HRSG adaptive control apparatus according to clause 1, wherein the machine readable instructions, when executed by the processor, further cause the processor to:
   substitute selected data for the HRSG design operation data with data from the plant operation data, wherein the selected data represents at least one of data that is missing from the HRSG design operation data and data that is identified for substitution with the data from the plant operation data.
7. The HRSG adaptive control apparatus according to clause 1, wherein the machine readable instructions, when executed by the processor, further cause the processor to:
   analyze an operation of the HRSG based on an application of load to the updated HRSG transient dynamic model; and
   perform fault detection operations based on results of the analysis of the operation of the HRSG.
8. The HRSG adaptive control apparatus according to clause 1, wherein the machine readable instructions, when executed by the processor, further cause the processor to:
   access a weight to be applied to a factor of the HRSG transient dynamic model prior to the update of the HRSG transient dynamic model, the weight being applied to the factor for fine tuning of the factor; and
   determine the tuning parameter based on an analysis of the accessed information, the accessed weight, and the accessed simulation results of the HRSG transient dynamic model prior to the update of the HRSG transient dynamic model.
9. A method for adaptive control of a heat recovery steam generator (HRSG), the method comprising:
   accessing information including HRSG design operation data for an HRSG to be controlled and plant operation data for a plant including the HRSG;
   accessing simulation results of an HRSG transient dynamic model of the HRSG;
   determining, by a processor, a tuning parameter for the HRSG transient dynamic model based on implementation of an objective function to minimize a difference between the accessed information and the accessed simulation results, wherein, for the objective function, a weight is applied to the difference between the accessed information and the accessed simulation results;
   updating the HRSG transient dynamic model based on an application of the determined tuning parameter to the HRSG transient dynamic model; and
   controlling operation of the HRSG using the updated HRSG transient dynamic model.
10. The method according to clause 9, further comprising:
   prior to controlling operation of the HRSG using the updated HRSG transient dynamic model, generating further simulation results based on execution of the updated HRSG transient dynamic model;
   determining whether a convergence criterion is met based on an analysis of the accessed information and the generated further simulation results; and
   in response to a determination that the convergence criterion is met, controlling operation of the HRSG using the updated HRSG transient dynamic model.
11. The method according to clause 10, further comprising:
   in response to a determination that the convergence criterion is not met, determining an updated tuning parameter based on an analysis of the accessed information and the generated further simulation results;
   further updating the updated HRSG transient dynamic model based on an application of the determined updated tuning parameter to the updated HRSG transient dynamic model;
   generating updated simulation results based on execution of the further updated HRSG transient dynamic model; and
   determining whether the convergence criterion is met based on an analysis of the accessed information and the generated updated simulation results.
12. The method according to clause 10, wherein determining whether the convergence criterion is met based on the analysis of the accessed information and the generated further simulation results further comprises:
   determining whether the convergence criterion is met based on an analysis of a difference between a first set of data including data selected from the HRSG design operation data and the plant operation data, and a second set of data including the generated further simulation results.
13. The method according to clause 9, further comprising:
   accessing HRSG mechanical design data for the HRSG from a steady state model of the HRSG;
   determining model parameters for the HRSG transient dynamic model prior to the update of the HRSG transient dynamic model based on an analysis of the accessed HRSG mechanical design data and the HRSG design operation data; and
   applying the determined model parameters to a predetermined HRSG transient dynamic model to generate the HRSG transient dynamic model prior to the update of the HRSG transient dynamic model.
14. The method according to clause 9, further comprising:
   substituting selected data for the HRSG design operation data with data from the plant operation data, wherein the selected data represents at least one of data that is missing from the HRSG design operation data and data that is identified for substitution with the data from the plant operation data.
15. A non-transitory computer readable medium having stored thereon machine readable instructions to provide adaptive control of a heat recovery steam generator (HRSG), the machine readable instructions, when executed, cause a processor to:
   access information including HRSG design operation data from a steady state model of an HRSG to be controlled and plant operation data for a plant including the HRSG;
   determine model parameters for an HRSG transient dynamic model of the HRSG based on an analysis of mechanical design data for the HRSG from the steady state model and the HRSG design operation data;
   generate, based on the determined model parameters, the HRSG transient dynamic model;
   access simulation results of the HRSG transient dynamic model;
   determine a tuning parameter for the HRSG transient dynamic model based on an analysis of the accessed information and the accessed simulation results;
   update the HRSG transient dynamic model based on an application of the determined tuning parameter to the HRSG transient dynamic model, wherein, for the determined tuning parameter, operational performance of the updated HRSG transient dynamic model and the steady state model at a steady state operation point are generally identical; and
   control operation of the HRSG using the updated HRSG transient dynamic model.
16. The non-transitory computer readable medium of clause 15, wherein the machine readable instructions to determine the tuning parameter for the HRSG transient dynamic model, when executed, further cause the processor to:
   implement an objective function to minimize a difference between the accessed information and the accessed simulation results, wherein, for the objective function, a weight is applied to the difference between the accessed information and the accessed simulation results.
17. The non-transitory computer readable medium of clause 15, wherein the machine readable instructions to determine the tuning parameter for the HRSG transient dynamic model, when executed, further cause the processor to:
   iteratively analyze the accessed information and the accessed simulation results of the HRSG transient dynamic model until a convergence criterion is met.
18. The non-transitory computer readable medium of clause 15, further comprising machine readable instructions, when executed, further cause the processor to:
   prior to controlling operation of the HRSG using the updated HRSG transient dynamic model, generate further simulation results based on execution of the updated HRSG transient dynamic model;
   determine whether a convergence criterion is met based on an analysis of the accessed information and the generated further simulation results; and
   in response to a determination that the convergence criterion is met, control operation of the HRSG using the updated HRSG transient dynamic model.
19. The non-transitory computer readable medium of clause 18, further comprising machine readable instructions, when executed, further cause the processor to:
   in response to a determination that the convergence criterion is not met, determine an updated tuning parameter based on an analysis of the accessed information and the generated further simulation results;
   further update the updated HRSG transient dynamic model based on an application of the determined updated tuning parameter to the updated HRSG transient dynamic model;
   generate updated simulation results based on execution of the further updated HRSG transient dynamic model; and
   determine whether the convergence criterion is met based on an analysis of the accessed information and the generated updated simulation results.
20. The non-transitory computer readable medium of clause 18, wherein the machine readable instructions to determine whether the convergence criterion is met, when executed, further cause the processor to:
   determine whether the convergence criterion is met based on an analysis of a difference between a first set of data including data selected from the HRSG design operation data and the plant operation data, and a second set of data including the generated further simulation results.

## Claims

1. A heat recovery steam generator (HRSG) adaptive control apparatus (100) comprising:
a processor (402, 604); and
a memory (404) storing machine readable instructions that when executed by the processor (402, 604) cause the processor (402, 604) to:
access (406) information including HRSG design operation data (108) for an HRSG (110) to be controlled and plant operation data (120) for a plant (128) including the HRSG (110);
access (408) simulation results (134) of an HRSG transient dynamic model (114) of the HRSG (110);
determine (410) a tuning parameter (122) for the HRSG transient dynamic model (114) based on an analysis of the accessed information and the accessed simulation results (134);
update (412) the HRSG transient dynamic model (114) based on an application of the determined tuning parameter (122) to the HRSG transient dynamic model (114);
generate (414) further simulation results (134) based on execution of the updated HRSG transient dynamic model (114);
determine (416) whether a convergence criterion (124) is met based on an analysis of the accessed information and the generated further simulation results (134); and
in response (418) to a determination that the convergence criterion (124) is met, control operation of the HRSG (110) using the updated HRSG transient dynamic model (114).

2. The HRSG adaptive control apparatus (100) according to claim 1, wherein the machine readable instructions, when executed by the processor (402, 604), further cause the processor (402, 604) to:
in response to a determination that the convergence criterion (124) is not met, determine an updated tuning parameter (122) based on an analysis of the accessed information and the generated further simulation results (134);
further update the updated HRSG transient dynamic model (114) based on an application of the determined updated tuning parameter (122) to the updated HRSG transient dynamic model (114);
generate updated simulation results (134) based on execution of the further updated HRSG transient dynamic model (114); and
determine whether the convergence criterion (124) is met based on an analysis of the accessed information and the generated updated simulation results (134).

3. The HRSG adaptive control apparatus (100) according to claim 1, wherein the HRSG design operation data (108) includes results of execution of a steady state model (106) of the HRSG (110).

4. The HRSG adaptive control apparatus (100) according to claim 1, wherein the machine readable instructions to determine whether the convergence criterion (124) is met based on the analysis of the accessed information and the generated further simulation results (134) further comprise machine readable instructions to cause the processor (402, 604) to:
determine whether the convergence criterion (124) is met based on an analysis of a difference between a first set of data including data selected from the HRSG design operation data (108) and the plant operation data (120), and a second set of data including the generated further simulation results (134).

5. The HRSG adaptive control apparatus (100) according to claim 1, wherein the machine readable instructions, when executed by the processor (402, 604), further cause the processor (402, 604) to:
access HRSG mechanical design data for the HRSG (110) from a steady state model of the HRSG (110);
determine model parameters (112) for the HRSG transient dynamic model (114) prior to the update of the HRSG transient dynamic model (114) based on an analysis of the accessed HRSG mechanical design data (104) and the HRSG design operation data (108); and
apply the determined model parameters (112) to a predetermined HRSG transient dynamic model (114) to generate the HRSG transient dynamic model (114) prior to the update of the HRSG transient dynamic model (114).

6. The HRSG adaptive control apparatus (100) according to claim 1, wherein the machine readable instructions, when executed by the processor (402, 604), further cause the processor (402, 604) to:
substitute selected data for the HRSG design operation data (108) with data from the plant operation data (120), wherein the selected data represents at least one of data that is missing from the HRSG design operation data (108) and data that is identified for substitution with the data from the plant operation data (120).

7. The HRSG adaptive control apparatus (100) according to claim 1, wherein the machine readable instructions, when executed by the processor (402, 604), further cause the processor (402, 604) to:
analyze an operation of the HRSG (110) based on an application of load to the updated HRSG transient dynamic model (114); and
perform fault detection operations based on results of the analysis of the operation of the HRSG (110).

8. The HRSG adaptive control apparatus (100) according to claim 1, wherein the machine readable instructions, when executed by the processor (402, 604), further cause the processor (402, 604) to:
access a weight (126) to be applied to a factor of the HRSG transient dynamic model (114) prior to the update of the HRSG transient dynamic model (114), the weight (126) being applied to the factor for fine tuning of the factor; and
determine the tuning parameter (122) based on an analysis of the accessed information, the accessed weight (126), and the accessed simulation results (134) of the HRSG transient dynamic model (114) prior to the update of the HRSG transient dynamic model (114).

9. A method (500) for adaptive control of a heat recovery steam generator (HRSG) (110), the method (500) comprising:
accessing (502) information including HRSG design operation data (108) for an HRSG (110) to be controlled and plant operation data (120) for a plant (128) including the HRSG (110);
accessing (504) simulation results (134) of an HRSG transient dynamic model (114) of the HRSG (110);
determining (506), by a processor (402, 604), a tuning parameter (122) for the HRSG transient dynamic model (114) based on implementation of an objective function to minimize a difference between the accessed information and the accessed simulation results (134), wherein, for the objective function, a weight (126) is applied to the difference between the accessed information and the accessed simulation results (134);
updating (508) the HRSG transient dynamic model (114) based on an application of the determined tuning parameter (122) to the HRSG transient dynamic model (114); and
controlling (510) operation of the HRSG (110) using the updated HRSG transient dynamic model (114).

10. The method (500) according to claim 9, further comprising:
prior to controlling operation (510) of the HRSG (110) using the updated HRSG transient dynamic model (114), generating further simulation results (134) based on execution of the updated HRSG transient dynamic model (114);
determining whether a convergence criterion (124) is met based on an analysis of the accessed information and the generated further simulation results (134); and
in response to a determination that the convergence criterion (124) is met, controlling operation of the HRSG using the updated HRSG transient dynamic model (114).

11. The method (500) according to claim 10, further comprising:
in response to a determination that the convergence criterion (124) is not met, determining an updated tuning parameter (122) based on an analysis of the accessed information and the generated further simulation results (134);
further updating (508) the updated HRSG transient dynamic model (114) based on an application of the determined updated tuning parameter (122) to the updated HRSG transient dynamic model (114);
generating updated simulation results (134) based on execution of the further updated HRSG transient dynamic model (114); and
determining whether the convergence criterion (124) is met based on an analysis of the accessed information and the generated updated simulation results (134).

12. The method (500) according to claim 10, wherein determining whether the convergence criterion (124) is met based on the analysis of the accessed information and the generated further simulation results (134) further comprises:
determining whether the convergence criterion (124) is met based on an analysis of a difference between a first set of data including data selected from the HRSG design operation data (108) and the plant operation data (120), and a second set of data including the generated further simulation results (134).

13. The method (500) according to claim 9, further comprising:
accessing HRSG mechanical design data (104) for the HRSG (110) from a steady state model (106) of the HRSG (110);
determining model parameters (112) for the HRSG transient dynamic model (114) prior to the update of the HRSG transient dynamic model (114) based on an analysis of the accessed HRSG mechanical design data (104) and the HRSG design operation data (108); and
applying the determined model parameters (112) to a predetermined HRSG transient dynamic model (114) to generate the HRSG transient dynamic model (114) prior to the update of the HRSG transient dynamic model (114).

14. The method (500) according to claim 9, further comprising:
substituting selected data for the HRSG design operation data (108) with data from the plant operation data (120), wherein the selected data represents at least one of data that is missing from the HRSG design operation data (108) and data that is identified for substitution with the data from the plant operation data (120).

15. A non-transitory computer readable medium (602) having stored thereon machine readable instructions to provide adaptive control of a heat recovery steam generator (HRSG) (110), the machine readable instructions, when executed, cause a processor (402, 604) to:
access (606) information including HRSG design operation data (108) from a steady state model (106) of an HRSG to be controlled and plant operation data (120) for a plant (128) including the HRSG (110);
determine (608) model parameters (112) for an HRSG transient dynamic model (114) of the HRSG (110) based on an analysis of mechanical design data for the HRSG (110) from the steady state model (106) and the HRSG design operation data (108);
generate (610), based on the determined model parameters (112), the HRSG transient dynamic model (114);
access (612) simulation results (134) of the HRSG transient dynamic model (114);
determine (614) a tuning parameter (122) for the HRSG transient dynamic model (114) based on an analysis of the accessed information and the accessed simulation results (134);
update (616) the HRSG transient dynamic model (114) based on an application of the determined tuning parameter (122) to the HRSG transient dynamic model (114), wherein, for the determined tuning parameter (122), operational performance of the updated HRSG transient dynamic model (114) and the steady state model (106) at a steady state operation point are generally identical; and
control (618) operation of the HRSG (110) using the updated HRSG transient dynamic model (114).
